# FASCICULE DE BREVET EUROPEEN

(11) **EP 3 409 340 B1**
(45) Date de publication et mention de la délivrance du brevet: **06.03.2024**
(21) Numéro de dépôt: 18175059.7
(22) Date de dépôt: 30.05.2018
(51) Int. Cl.: B01D 36/02, B01D 25/164, B01D 29/09, B01D 29/52, B01D 29/82, C02F 11/12, C02F 11/14

(54) **INSTALLATION ET PROCÉDÉ DE FILTRATION D'UN MÉLANGE LIQUIDE/SOLIDE**
ANLAGE UND VERFAHREN ZUM FILTERN EINES FLÜSSIG-/FESTSTOFF-GEMISCHES
INSTALLATION AND METHOD FOR FILTERING A LIQUID/SOLID MIXTURE

(30) Priorité: 30.05.2017 FR 1754717
(43) Date de publication de la demande: 05.12.2018
(73) Titulaire: Gombart, Marc, 45160 Ardon (FR)
(72) Inventeur: GOMBART, Marc, 45160 Ardon (FR)
(74) Mandataire: Fédit-Loriot

(56) Documents cités:
- DE-A1- 3 444 475
- DE-C1- 4 302 922
- FR-A1- 2 568 139
- FR-A1- 2 875 228
- FR-A1- 2 986 163
- JP-A- S60 130 498

## Description

La présente invention se rapporte à un procédé de filtration d'un mélange liquide/solide et à une installation pour mettre en oeuvre ledit procédé.

Un domaine d'application envisagé est par exemple celui de la filtration des boues d'une station urbaine d'épuration des eaux.

Les boues sont des mélanges liquide/solide, et elles se présentent sous forme liquide. Aussi, elles présentent une phase liquide et une phase solide dispersée dans la phase liquide. Ainsi elles incluent des particules solides en suspension, notamment de matières organiques, et de grandes quantités d'eau. Les particules organiques sont de nature à favoriser le développement de la fermentation, et partant, le dégagement d'odeurs nauséabondes. Aussi, outre la filtration, on procède également au traitement et au conditionnement des boues qui visent à les stabiliser et à éviter leur fermentation ultérieure. Les traitements favorisent également l'extraction de l'eau.

On connait différents procédés de filtration des boues pour pouvoir concentrer les matières solides. Usuellement, au préalable à l'opération de filtration, on ajoute donc à la boue un agent floculant permettant de favoriser l'agrégation des matières solides en suspension, et un agent permettant de réduire leur fermentescibilité, par exemple de la chaux. Puis, on met en oeuvre un support poreux sur lequel on vient déposer la boue conditionnée afin ensuite, de pouvoir aspirer une partie substantielle de l'eau qu'elle contient à travers le support poreux. De la sorte, la déshydratation de la boue conditionnée peut être réalisée en continu, si l'on met en oeuvre un support poreux mobile en translation.

On pourra se reporter par exemple au document FR 2 986 163 A1 lequel décrit la mise en oeuvre d'un tel procédé. Le document FR 2 568 139 décrit un appareil pour la séparation de la phase liquide d'une suspension solide-liquide, dans lequel la suspension préalablement épaissie est disposée entre deux bandes sans fin filtrantes et soumise à une pression au moyen d'un module presseur animé d'un mouvement de va-et-vient.

En revanche, aussi longtemps que l'on puisse aspirer l'eau de la boue à travers le support poreux, et avec une intensité maximale eu égard aux moyens usuels employés, la déshydratation n'est pas suffisante pour pouvoir manipuler ensuite la boue déshydratée à un coût acceptable. L'objet du document FR 2 875 228 A1 divulgue la mise en oeuvre d'oxyde de calcium à réactivité retard dans le traitement des boues, mais sur des temps courts.

Aussi, un problème qui se pose et que vise à résoudre la présente invention est de fournir un procédé et une installation de mise en oeuvre qui permettent de pouvoir filtrer suffisamment les boues pour diminuer le coût de stockage de leurs résidus.

Dans ce but, et selon un premier objet, il est proposé un procédé de filtration de mélange liquide/solide tel que défini dans la revendication 1.

Ainsi, une caractéristique de l'invention réside dans la mise en oeuvre de deux étapes successives, après le conditionnement du mélange liquide/solide avec de l'oxyde de calcium. La première étape vise à aspirer la phase liquide à travers la paroi poreuse en créant une dépression dans la zone située à l'opposé de la zone dans laquelle se situe le mélange liquide/solide, ou boue, la seconde visant à appliquer une pression supérieure dans la zone incluant la boue par rapport à la pression de la zone opposée par rapport à l'autre paroi poreuse. De la sorte, la boue subit successivement deux mécanismes différents d'extraction du liquide qu'elle contient, ce qui conduit à une meilleure déshydratation. Et en conséquence, la boue ainsi déshydratée est d'un encombrement minimal et est moins coûteuse à stocker.

Par ailleurs, la dispersion d'oxyde de calcium dans le mélange liquide/solide en amont de ladite une paroi poreuse, et de ladite une desdites deux zones dans laquelle ledit mélange liquide/solide est porté, favorise avant cette première étape a), la floculation des particules solides. Et au surplus, alors que cet ajout de matières solides dans le mélange à traiter concourt à augmenter la quantité dudit autre résidu, il permet avantageusement de rendre ledit autre résidu également valorisable pour l'amendement des cultures. Ainsi, alors que le mélange liquide-solide est non seulement malaisé à filtrer, mais au surplus conduit à un autre résidu non valorisable qui doit être incinéré, le mélange avec de l'oxyde de calcium permet de faciliter la filtration et aussi de contribuer au chaulage des terres agricoles.

Aussi, si ledit résidu présente une première siccité, alors avantageusement, ledit autre résidu présente une deuxième siccité supérieure à ladite première siccité.

Préférentiellement, à l'étape a) on fournit en outre du chlorure ferrique, et avant l'étape b) on injecte ledit chlorure ferrique dans ledit mélange liquide/solide. Le chlorure ferrique est un agent de coagulation, et grâce à l'effet de la coagulation, on améliore la déshydratation de la boue.

L'oxyde de calcium, ou chaux, est dispersé sous forme pulvérulente dans le mélange liquide/solide. Aussi, on ajoute l'agent de coagulation en amont de la dispersion de l'oxyde de calcium.

Selon un mode de réalisation particulièrement avantageux, à l'étape a) on fournit, d'une part un mélange liquide/solide présentant une phase liquide aqueuse, et d'autre part de l'oxyde de calcium à réactivité retard, et les étapes b) à d) sont mise en oeuvre sur une période de temps inférieure au temps de réaction entre ledit oxyde de calcium à réactivité retard et la phase aqueuse dudit mélange liquide/solide. L'oxyde de calcium à réactivité retard, est un oxyde de calcium sous forme pulvérulente, qui a été partiellement hydraté. De la sorte, lorsque ces particules sont mises en contact avec l'eau, la diffusion de l'eau à l'intérieur des particules n'est pas immédiate et la réaction avec l'oxyde de calcium est décalée dans le temps.

Grâce à la mise en oeuvre de cet oxyde de calcium à réactivité retard, non seulement on favorise la floculation, mais au surplus, et comme on l'expliquera plus en détail dans la suite de la description, on réduit la fermentescibilité. On observera que d'autres types d'oxyde de calcium peuvent présenter une réactivité retardée.

Préférentiellement, et conformément au procédé selon invention, on applique à ladite une desdites deux zones, précisément dans la zone où se situe la boue, une pression voisine de la pression atmosphérique. Aussi, la boue est à l'air libre, tandis que la phase liquide est aspirée à travers la paroi poreuse dans la zone opposée.

En outre, on applique à l'autre desdites deux autres zones une pression voisine de la pression atmosphérique. Ainsi, l'autre desdites deux zones, opposée à la zone où se situe le résidu, est à l'air libre, tandis que la zone opposée est en pression.

Selon une première variante d'exécution de l'invention, on provoque le confinement de ladite une desdites deux autres zones pour pouvoir appliquer une pression supérieure à la pression atmosphérique. Ainsi, on vient isoler ladite une desdites deux autres zones dans laquelle se situe le résidu et on applique ensuite une pression supérieure à la pression atmosphérique dans cette zone de manière à provoquer l'écoulement du fluide demeurant dans le résidu à travers l'autre paroi poreuse.

On observera que, selon cette première variante d'exécution, et conformément à un mode particulier de réalisation de l'invention, ladite une paroi poreuse et ladite autre paroi poreuse constituent la même paroi poreuse.

Conformément à l'invention, ladite autre paroi poreuse est refermée sur elle-même pour former une poche de filtration, et on injecte ledit résidu sous pression à l'intérieur de ladite poche de filtration. La paroi poreuse est alors formée d'une toile de filtration à travers laquelle on vient forcer sous pression l'écoulement du fluide contenu dans le résidu. Le résidu est alors injecté sous pression à l'intérieur de ladite poche au moyen d'un organe de pompage.

Avantageusement, on fractionne ladite poche de filtration en une pluralité de chambres de filtration raccordées entre elles. on vient ainsi assembler une pluralité d'éléments de toile de filtration de manière étanche pour former une succession de chambre de filtration reliée entre elles par leur centre comme on l'expliquera plus en détail ci-après.

Selon un autre objet, il est proposé une installation de filtration d'un mélange liquide/solide, selon la revendication 8. Ainsi, une caractéristique de l'invention réside dans la mise en oeuvre de deux fois deux zones opposées par rapport, respectivement à deux parois poreuses, les deux fois deux zones opposées étant contiguës, de manière à pouvoir mettre en oeuvre les deux étapes successives précitées, la première visant à aspirer la phase liquide à travers la paroi poreuse en créant une dépression dans la zone située à l'opposé de la zone dans laquelle se situe ledit mélange liquide/solide, ou boue, la seconde visant à appliquer une pression supérieure dans la zone incluant la boue par rapport à la pression de la zone opposée par rapport à l'autre paroi poreuse.

Aussi, installation de filtration comprend en outre un conditionneur situé en amont de ladite une paroi poreuse pour pouvoir disperser de l'oxyde de calcium dans ledit mélange liquide/solide. Le conditionneur comprend une retenue à l'intérieur de laquelle se déversent le mélange liquide/solide et l'oxyde de calcium tous deux stockés en amont. De la sorte, le mélange liquide/solide est mélangé à l'oxyde de calcium de façon homogène sans dénaturation mécanique du mélange comme on l'expliquera plus en détail dans la suite de la description. Dans cette phase la floculation des particules solides du mélange est alors améliorée.

Selon l'invention, ledit autre dispositif à pression comprend une pluralité de plateaux accolés successivement les uns aux autres en formant des logements respectivement entre lesdits plateaux, tandis que ladite autre paroi poreuse est refermée sur elle-même pour former une poche de filtration divisée en une pluralité de chambres de filtration raccordées entre elles et qui viennent respectivement s'étendre à l'intérieur desdits logements. Ainsi, on forme un filtre-presse grâce auquel on injecte sous pression le résidu pour pouvoir provoquer l'autre écoulement de phase liquide, phase liquide qui demeurait dans le résidu après la première étape de traitement.

Pour ce faire, ledit autre dispositif à pression comprend des organes de pompage pour pouvoir injecter ledit résidu sous pression à l'intérieur de ladite poche de filtration, comme on l'expliquera plus en détail dans la suite de la description.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique d'une installation conforme à l'invention permettant de mettre en oeuvre le procédé de filtration selon l'invention conformément à une variante d'exécution ;
- la Figure 2 est un organigramme illustrant le procédé de filtration conformément à la variante d'exécution de l'installation.

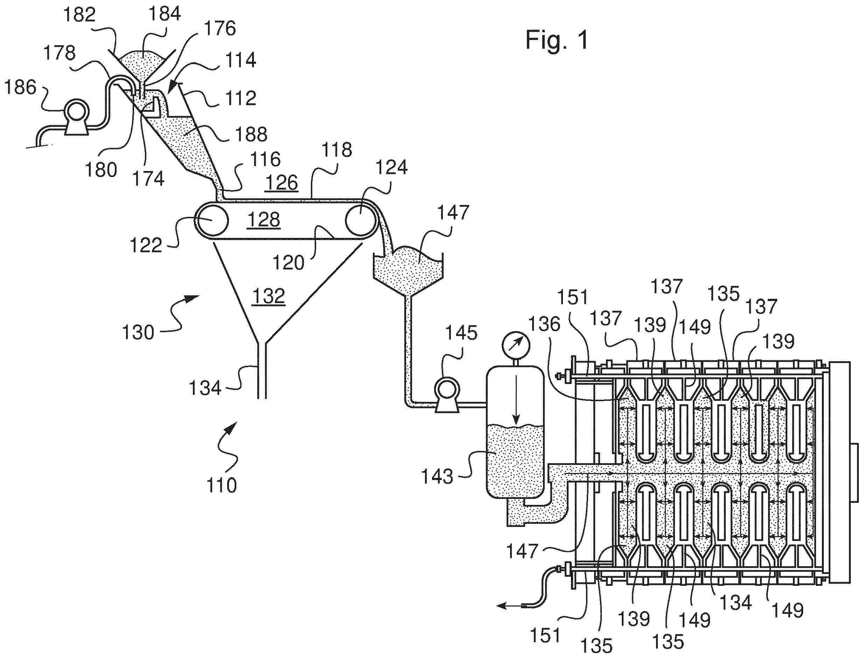

La Figure 1 illustre schématiquement une installation de filtration de boue 110 conforme à l'invention selon une variante d'exécution. Elle comporte ainsi un conditionneur 112 présentant une ouverture d'entrée 114 et une ouverture de sortie 116 à l'opposé. L'ouverture de sortie 116 débouche en surplomb d'une première paroi poreuse 118 formant à la fois support et filtre. La première paroi poreuse 118 est constituée d'une première bande continue 120 tendue sensiblement horizontalement entre un premier rouleau d'entraînement amont 122 et un premier rouleau d'entraînement aval 124. Aussi, la paroi poreuse 118 délimite deux premières zones opposées, une première zone de réception 126, et une première zone d'évacuation 128.

L'installation de filtration 110 comprend également un premier dispositif à pression 130 comprenant une chambre d'aspiration 132 installée sous la paroi poreuse 118. La chambre d'aspiration 132, de forme générale conique converge vers une tubulure d'aspiration 134.

On expliquera bien évidemment le mode de fonctionnement dans la suite de la description après avoir décrit l'ensemble de l'installation.

L'installation de filtration de boue 110 comporte en outre une deuxième paroi poreuse 136, refermée sur elle-même en une seule poche et définissant une pluralité de chambre de filtration 135. L'installation comprend également une pluralité de plateaux 137 présentant chacun deux faces opposées en creux. Les plateaux 137 sont accolés successivement les uns aux autres en formant des logements 139 respectivement entre lesdits plateaux. Les plateaux 137 sont ainsi maintenus à force en applique les uns contre les autres grâce a un vérin hydraulique. Chacune des chambres de filtration 135 s'étend à l'intérieur d'un logement 139. Et les chambres de filtration 135 sont raccordées entre elles de manière étanche au niveau de leur centre C.

Ainsi, les chambres de filtration 135 comportent une entrée commune 141 précédent un réservoir pressurisé 143, lui-même relié à une pompe d'alimentation 145.

Avant de décrire le procédé selon cette deuxième variante d'exécution, on reviendra à la description du conditionneur 112.

Le conditionneur 112, présente ainsi en amont vers l'ouverture d'entrée 114, une retenue 174 à l'intérieur de laquelle débouche un conduit d'amenée 176 de chaux et une conduite d'arrivée 178 de boue à traiter 180. Le conduit d'amenée 176 prolonge une trémie de stockage 182 contenant de la chaux 184, tandis que la conduite d'arrivée 178 prolonge une pompe 186, laquelle est apte à aspirer la boue dans un réservoir de stockage non représenté. Ainsi, la boue à traiter se déverse à l'intérieur de la retenue 174, tandis que la chaux 184 est délivrée à l'intérieur de cette même retenue 174 par l'intermédiaire du conduit d'amenée 134. L'alimentation en continu de la boue à traiter par l'intermédiaire de la conduite d'arrivée 178, provoque le débordement continu de la boue et de la chaux au-delà de la retenue 174 et partant, la dispersion de la chaux à l'intérieur de la boue à traiter. Ensuite, à l'intérieur du conditionneur 112, la boue ainsi mélangée à la chaux s'achemine progressivement vers l'ouverture de sortie 116 en formant un écoulement gravitaire et en se mélangeant plus encore selon un écoulement laminaire.

Aussi, selon encore un autre mode de mise en oeuvre, particulièrement avantageux, du chlorure ferrique est ajouté à la boue à traiter au niveau de la retenue 178 pour favoriser la coagulation dans le milieu.

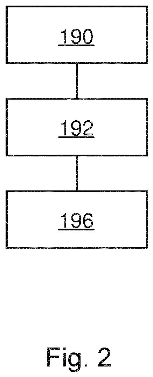

Ainsi, selon une première étape 190 schématisée dans l'organigramme représenté sur la Figure 2, la boue conditionnée se dépose en traversant l'ouverture de sortie 116, dans la première zone de réception 126 sur la première paroi poreuse 118 qui est entraînée elle-même en mouvement. Alors que la boue conditionnée se dépose sur la première paroi poreuse 118, grâce à la tubulure d'aspiration 134, on créer une dépression à l'intérieur de chambre d'aspiration 132, comprise par exemple entre 0.05 bar et 0,95 bar et de préférence entre 0,3 bar et 0,6 bar, de manière à pouvoir aspirer la phase liquide contenue dans la boue conditionnée et déposée sur la première paroi poreuse 118 à travers cette dernière.

Dans une deuxième étape 192, on transfère le premier résidu dans un premier réservoir 147. Conformément à une troisième étape 196, le premier résidu est suffisamment fluide pour pouvoir être pompé par l'intermédiaire de la pompe d'alimentation 145 qui injecte alors sous pression le premier résidu à l'intérieur du réservoir pressurisé 143. La pression interne du réservoir 143 peut alors être comprise entre 5 bar et 15 bar.

Malgré les pertes de charges, la pression du premier résidu à l'intérieur des chambres de filtration 135, peut également atteindre entre 5 bar et 15 bar.

Ainsi, la phase liquide encore contenue dans le premier résidu s'écoule à travers la deuxième paroi poreuse 136 dans chacune des chambres de filtration 135, tandis que la phase solide s'accumule à l'intérieur des chambres de filtration 135 dans les logements 139. La phase liquide est alors collectée à travers les plateaux 137 par des collecteurs radiaux 149 qui rejoignent eux-mêmes des collecteurs axiaux 151.

De la sorte, en reprenant une boue du type de celle du deuxième exemple précité où les débits envisagés sont ceux d'une station urbaine d'un équivalent de 35 000 habitants, on expliquera ci-après les résultats obtenus à travers l'installation 110 conformément à la seconde variante de réalisation.

La conduite d'arrivée 178 de boue délivre une boue présentant 8 g par litre de matières en suspension. La boue est alors conditionnée par du chlorure ferrique à hauteur de 6% par rapport aux matières en suspension, et avec de la chaux à hauteur de 30 % des matières en suspension. L'ouverture de sortie 16 délivre alors une boue conditionnée avec un et un débit voisin de 25 m³ par heure, soit l'équivalent de 200 kg de matières en suspension par heure. La siccité du premier résidu est alors comprise entre 50 g/l et 80 g/l. Le temps moyen qui s'écoule alors entre le moment où la chaux est en contact avec la boue et la fin du processus d'aspiration du liquide, est inférieur à quatre minutes.

Le premier résidu est alors transféré par l'intermédiaire de la pompe d'alimentation 145 sous pression de 12 bar à l'intérieur du réservoir pressurisé 143. La siccité du deuxième résidu situé à l'intérieur des chambres de filtration 135 entre les plateaux 137 est comprise entre 35% 38%. Le temps de filtration est alors de 70 minutes.

Comparativement, les installations de filtration classique ne permettent pas d'obtenir un deuxième résidu dont la siccité soit supérieure à 32 %, dans des temps sensiblement du double.

## Revendications

1. Procédé de filtration de mélange liquide/solide du type comprenant les étapes suivantes :
- a) on fournit une paroi poreuse (18 ; 118) délimitant deux zones opposées l'une de l'autre (26, 28 ; 126, 128) et une autre paroi poreuse (36 ; 136) délimitant deux autres zones (44, 46; 135, 139), et un mélange liquide/solide comprenant une phase liquide aqueuse et une phase solide ;
- b) on porte ledit mélange liquide/solide dans l'une desdites deux zones (26; 126), tandis qu'on applique une pression inférieure à la pression atmosphérique dans l'autre desdites deux zones (28; 128) de manière à provoquer un écoulement de phase liquide à travers ladite paroi poreuse (18 ; 118), pour pouvoir obtenir un résidu dans ladite une desdites deux zones ;
- c) on porte ledit résidu dans l'une desdites deux autres zones (44 ; 135) ; et,
- d) on applique une pression supérieure à la pression atmosphérique dans ladite une desdites deux autres zones (44 ; 135) de manière à provoquer un autre écoulement de phase liquide à travers ladite autre paroi poreuse (36 ; 136), et pour obtenir un autre résidu dans ladite une desdites deux autres zones ;
**caractérisé en ce qu'**on fournit en outre à l'étape a) de l'oxyde de calcium à réactivité retard, tandis que ladite autre paroi poreuse est refermée sur elle-même pour former une poche de filtration, ledit oxyde de calcium à réactivité retard étant dispersé dans ledit mélange liquide/solide avant l'étape b) ;
et **en ce qu'**à l'étape d) on injecte ledit résidu sous pression à l'intérieur de ladite poche de filtration, tandis que les étapes b) à d) sont mises en oeuvre sur une période de temps inférieure au temps de réaction entre ledit oxyde de calcium à réactivité retard et la phase aqueuse dudit mélange liquide/solide.

2. Procédé de filtration selon la revendication 1, **caractérisé en ce que** ledit résidu présente une première siccité, et **en ce que** ledit autre résidu présente une deuxième siccité supérieure à ladite première siccité.

3. Procédé de filtration selon la revendication 1 ou 2, **caractérisé en ce qu'**à l'étape a) on fournit en outre du chlorure ferrique, et **en ce qu'**avant l'étape b) on injecte ledit chlorure ferrique dans ledit mélange liquide/solide.

4. Procédé de filtration selon l'une quelconque des revendications 1 à 3, **caractérisé en ce qu'**on applique à ladite une desdites deux zones (26 ; 126) une pression voisine de la pression atmosphérique.

5. Procédé de filtration selon l'une quelconque des revendications 1 à 4, **caractérisé en ce qu'**on applique à l'autre desdites deux autres zones (46 ; 139) une pression voisine de la pression atmosphérique.

6. Procédé de filtration selon l'une quelconque des revendications 1 à 5, **caractérisé en ce qu'**on provoque le confinement de ladite une desdites deux autres zones (44 ; 135) pour pouvoir appliquer une pression supérieure à la pression atmosphérique.

7. Procédé de filtration selon l'une quelconque des revendications 1 à 6, **caractérisé en ce qu'**on fractionne ladite poche de filtration en une pluralité de chambres de filtration (135) raccordées entre elles.

8. Installation de filtration d'un mélange liquide/solide, ledit mélange liquide/solide comprenant une phase liquide aqueuse et une phase solide, ladite installation comprenant :
- une paroi poreuse (18 ; 118) délimitant deux zones opposées (26, 28 ; 126, 128) l'une de l'autre, ledit mélange liquide/solide étant porté dans l'une desdites deux zones (26 ; 126) ;
- un conditionneur (12 ; 112) situé en amont de ladite une paroi poreuse (18 ; 118) pour pouvoir disperser de l'oxyde de calcium à réactivité retard dans ledit mélange liquide/solide ;
- un dispositif à pression (32 ; 132) pour pouvoir appliquer une pression inférieure à la pression atmosphérique dans l'autre desdites deux zones (28 ; 128) de manière à provoquer un écoulement de phase liquide à travers ladite paroi poreuse (18 ; 118), pour pouvoir obtenir un résidu dans ladite une desdites deux zones ;
- une autre paroi poreuse (36 ; 136) délimitant deux autres zones (44, 46 ; 135, 139) ;
- un dispositif de convoyage (36, 40, 43 ; 143, 145) pour porter ledit résidu dans l'une desdites deux autres zones (44 ; 135) ; et,
- un autre dispositif à pression (48, 50, 52, 54; 143, 145) comprenant une pluralité de plateaux (137) accolés successivement les uns aux autres en formant des logements (139) respectivement entre lesdits plateaux pour appliquer une pression supérieure à la pression atmosphérique dans ladite une desdites deux autres zones (44 ; 135) de manière à provoquer un autre écoulement de phase liquide à travers ladite autre paroi poreuse (36 ; 136), et pour obtenir un autre résidu dans ladite une desdites deux autres zones ;
**caractérisée en ce que en ce que** ladite autre paroi poreuse (136) est refermée sur elle-même pour former une poche de filtration divisée en une pluralité de chambres de filtration (135) raccordées entre elles et qui viennent respectivement s'étendre à l'intérieur desdits logements ;
et **en ce que** ledit autre dispositif à pression comprend des organes de pompage (145) pour pouvoir injecter ledit résidu sous pression à l'intérieur de ladite poche de filtration.

## Patentansprüche

1. Verfahren zum Filtern eines flüssigen/festen Gemischs des Typs, der die folgenden Schritte umfasst:
- a) Bereitstellen einer porösen Wand (18; 118), die zwei gegenüberliegende Zonen (26, 28; 126, 128) voneinander abgrenzt, und einer weiteren porösen Wand (36; 136), die zwei weitere Zonen (44, 46; 135, 139) abgrenzt, und eines flüssigen/festen Gemischs, das eine wässrige flüssige Phase und eine feste Phase umfasst;
- b) Einbringen des flüssigen/festen Gemischs in eine der beiden Zonen (26; 126), während in der anderen der beiden Zonen (28; 128) ein Druck angelegt wird, der kleiner als der atmosphärische Druck ist, um einen Fluss der flüssigen Phase durch die poröse Wand (18; 118) zu bewirken, um einen Rückstand in einer der beiden Zonen erhalten zu können;
- c) Einbringen des Rückstands in eine der beiden weiteren Zonen (44; 135); und
- d) Anlegen eines Drucks, der größer als der atmosphärische Druck ist, in der einen der beiden weiteren Zonen (44; 135), um einen weiteren Fluss der flüssigen Phase durch die weitere poröse Wand (36; 136) zu bewirken und einen weiteren Rückstand in der einen der beiden weiteren Zonen zu erhalten;
**dadurch gekennzeichnet, dass** in Schritt a) ferner Calciumoxid mit verzögerter Reaktivität bereitgestellt wird, während die weitere poröse Wand in sich geschlossen wird, um einen Filterbeutel zu bilden, wobei das Calciumoxid mit verzögerter Reaktivität vor Schritt b) in dem flüssigen/festen Gemisch dispergiert wird;
und dadurch, dass in Schritt d) der Rückstand unter Druck in den Filterbeutel eingespritzt wird, während die Schritte b) bis d) über einen Zeitraum durchgeführt werden, der kürzer ist als die Reaktionszeit zwischen dem Calciumoxid mit verzögerter Reaktivität und der wässrigen Phase des flüssigen/festen Gemischs.

2. Filterverfahren nach Anspruch 1, **dadurch gekennzeichnet, dass** der Rückstand einen ersten Trockengehalt aufweist, und dadurch, dass der andere Rückstand einen zweiten Trockengehalt aufweist, der größer als der erste Trockengehalt ist.

3. Filterverfahren nach Anspruch 1 oder 2, **dadurch gekennzeichnet, dass** in Schritt a) ferner Eisenchlorid bereitgestellt wird, und dadurch, dass vor Schritt b) das Eisenchlorid in das flüssige/feste Gemisch eingespritzt wird.

4. Filterverfahren nach einem der Ansprüche 1 bis 3, **dadurch gekennzeichnet, dass** auf die eine der beiden Zonen (26; 126) ein Druck nahe dem atmosphärischen Druck angelegt wird.

5. Filterverfahren nach einem der Ansprüche 1 bis 4, **dadurch gekennzeichnet, dass** auf die andere der beiden weiteren Zonen (46; 139) ein Druck nahe dem atmosphärischen Druck angelegt wird.

6. Filterverfahren nach einem der Ansprüche 1 bis 5, **dadurch gekennzeichnet, dass** die Eingrenzung der einen der beiden weiteren Zonen (44; 135) bewirkt wird, um einen Druck anlegen zu können, der größer als der atmosphärische Druck ist.

7. Filterverfahren nach einem der Ansprüche 1 bis 6, **dadurch gekennzeichnet, dass** der Filterbeutel in eine Vielzahl von miteinander verbundenen Filterkammern (135) unterteilt ist.

8. Anlage zum Filtern eines flüssigen/festen Gemischs, wobei das flüssige/feste Gemisch eine wässrige flüssige Phase und eine feste Phase umfasst, wobei die Anlage Folgendes umfasst:
- eine poröse Wand (18; 118), die zwei einander gegenüberliegende Zonen (26, 28; 126, 128) voneinander abgrenzt, wobei das flüssige/feste Gemisch in eine der beiden Zonen (26; 126) eingebracht wird;
- einen Konditionierer (12; 112), der sich stromaufwärts der porösen Wand (18; 118) befindet, um Calciumoxid mit verzögerter Reaktivität in dem flüssigen/festen Gemisch dispergieren zu können;
- eine Druckvorrichtung (32; 132), um in der anderen der beiden Zonen (28; 128) einen Druck anlegen zu können, der kleiner als der atmosphärische Druck ist, um einen Fluss der flüssigen Phase durch die poröse Wand (18; 118) zu bewirken, um einen Rückstand in einer der beiden Zonen erhalten zu können;
- eine weitere poröse Wand (36; 136), die zwei weitere Zonen (44, 46; 135, 139) abgrenzt;
- eine Fördervorrichtung (36, 40, 43; 143, 145), um den Rückstand in eine der beiden weiteren Zonen (44; 135) einzubringen; und
- eine weitere Druckvorrichtung (48, 50, 52, 54; 143, 145), umfassend eine Vielzahl von Platten (137), die nacheinander aneinandergefügt werden, indem sie jeweils zwischen den Platten Gehäuse (139) bilden, um in einer der beiden weiteren Zonen (44; 135) einen Druck anzulegen, der größer als der atmosphärische Druck ist, um so einen weiteren Fluss der flüssigen Phase durch die weitere poröse Wand (36; 136) zu bewirken, und um einen weiteren Rückstand in einer der beiden weiteren Zonen zu erhalten;
**dadurch gekennzeichnet, dass** die weitere poröse Wand (136) in sich geschlossen ist, um einen Filterbeutel zu bilden, der in eine Vielzahl von miteinander verbundenen Filterkammern (135) unterteilt ist, die miteinander verbunden sind und sich jeweils in das Innere der Gehäuse erstrecken;
und dadurch, dass die weitere Druckvorrichtung Pumpelemente (145) umfasst, um den Rückstand unter Druck in das Innere des Filterbeutels einspritzen zu können.

## Claims

1. A method for filtering a liquid/solid mixture of the type comprising the following steps:
- a) a porous wall (18; 118) delimiting two areas which are opposite to each other (26, 28; 126, 128) and another porous wall (36; 136) delimiting two other areas (44, 46; 135, 139), and a liquid/solid mixture comprising an aqueous liquid phase and a solid phase are provided;
- b) said liquid/solid mixture is brought into one of said two areas (26; 126), while a pressure lower than atmospheric pressure is applied in the other of said two areas (28; 128) so as to cause a flow of liquid phase through said porous wall (18; 118), to be able to obtain a residue in said one of said two areas;
- c) said residue is brought into one of said two other areas (44; 135); and,
- d) a pressure greater than atmospheric pressure is applied in said one of said two other areas (44; 135) so as to cause another flow of liquid phase through said other porous wall (36; 136), and to obtain another residue in said one of said two other areas;
**characterised in that** calcium oxide with delayed reactivity is further provided in step a), while said other porous wall is closed on itself to form a filtration bag, said calcium oxide with delayed reactivity being dispersed in said liquid/solid mixture before step b);
and **in that** in step d) said residue is injected under pressure inside said filtration bag, while steps b) to d) are implemented over a period of time less than the reaction time between said calcium oxide with delayed reactivity and the aqueous phase of said liquid/solid mixture.

2. The filtration method according to claim 1, **characterised in that** said residue has a first dryness, and **in that** said other residue has a second dryness which is greater than said first dryness.

3. The filtration method according to claim 1 or 2, **characterised in that** in step a), ferric chloride is further provided, and **in that** before step b), said ferric chloride is injected into said liquid/solid mixture.

4. The filtration method according to any one of claims 1 to 3, **characterised in that** a pressure close to atmospheric pressure is applied to said one of said two areas (26; 126).

5. The filtration method according to any one of claims 1 to 4, **characterised in that** a pressure close to atmospheric pressure is applied to the other of said two other areas (46; 139).

6. The filtration method according to any one of claims 1 to 5, **characterised in that** the confinement of said one of said two other areas (44; 135) is caused to be able to apply a pressure which is greater than atmospheric pressure.

7. The filtration method according to any one of claims 1 to 6, **characterised in that** said filtration bag is divided into a plurality of filtration chambers (135) which are connected to each other.

8. An installation for filtering a liquid/solid mixture, said liquid/solid mixture comprising an aqueous liquid phase and a solid phase, said installation comprising:
- a porous wall (18; 118) delimiting two areas (26, 28; 126, 128) which are opposite to each other, said liquid/solid mixture being brought into one of said two areas (26; 126);
- a conditioner (12; 112) located upstream of said one porous wall (18; 118) to be able to disperse calcium oxide with delayed reactivity in said liquid/solid mixture;
- a pressure device (32; 132) to be able to apply a pressure lower than atmospheric pressure in the other of said two areas (28; 128) so as to cause a flow of liquid phase through said porous wall (18; 118), to be able to obtain a residue in said one of said two areas;
- another porous wall (36; 136) delimiting two other areas (44, 46; 135, 139);
- a conveying device (36, 40, 43; 143, 145) for bringing said residue into one of said two other areas (44; 135); and,
- another pressure device (48, 50, 52, 54; 143, 145) comprising a plurality of plates (137) successively joined to each other by forming housings (139) respectively between said plates to apply a pressure which is greater than atmospheric pressure in said one of said two other areas (44; 135) so as to cause another flow of liquid phase through said other porous wall (36; 136), and to obtain another residue in said one of said two others areas;
**characterised in that** said other porous wall (136) is closed on itself to form a filtration bag divided into a plurality of filtration chambers (135) which are connected to each other and which respectively extend inside said housings;
and **in that** said other pressure device comprises pumping members (145) to be able to inject said residue under pressure inside said filtration bag.
